# EUROPEAN PATENT APPLICATION

(11) **EP 4 718 828 A1**
(43) Date of publication of application: **01.04.2026**
(21) Application number: 25205472.1
(22) Date of filing: 29.09.2025
(51) Int. Cl.: H04M 1/72454, H04W 4/02, B60W 40/09, B60W 50/14

(54) **METHODS AND SYSTEMS FOR OPTIMIZING MOBILE DEVICE RESOURCE CONSUMPTION WHILE DETECTING DRIVING ACTIVITIES**

(30) Priority: 30.09.2024 US 202418902238
(71) Applicant: Cambridge Mobile Telematics Inc., Cambridge, MA 02142 (US)
(72) Inventor: BALAKRISHNAN, Hari, Cambridge, 02142 (US)
(74) Representative: Mewburn Ellis LLP

(57) **Abstract**

Techniques for optimizing mobile device resource consumption while detecting driving activities are provided. In examples, an application executing on a mobile device determines that the device is disposed in a vehicle during a drive and receives movement measurements indicating motion of the device caused by a user or the vehicle from a sensor arrangement of the mobile device. The movement measurements are analyzed to detect an occurrence of a driving event during the drive and a notification of the driving event is generated. Audio routes available to the operating system of the device are received by the application and a determination is made that the user is driving the vehicle based on the available audio routes. In response, the notification is provided to the user.

## Description

### BACKGROUND OF THE INVENTION

Mobile phones offer an ever improving suite of sensors whose data can be used to evaluate the surrounding environment and the mobile phone's relationship thereto. These capabilities offer many possibilities for detecting when the user of the mobile phone is riding in a vehicle, as well as the movements of the vehicle. As a result, insights into the driving tendencies of the person operating the vehicle may be obtained. However, despite the progress made in the area of using mobile device sensors to detect driving abilities, there is a need in the art for improved methods and systems for correctly attributing detected driving abilities to the user of a mobile device.

### SUMMARY OF THE INVENTION

Embodiments of the present invention generally relate to optimizing mobile device resource consumption while detecting driving activities. In some embodiments, a method is provided. The method may comprise determining, by an application executing on a mobile phone, that the mobile phone is disposed in a vehicle during a drive. The method may further comprise receiving, by the application, and from a sensor arrangement of the mobile phone, movement measurements indicating motion of the mobile phone caused by a user of the mobile phone or movement of the vehicle during the drive. The method may further comprise analyzing, by the application, the movement measurements to detect an occurrence of a driving event during the drive. The method may further comprise generating, by the application, a notification of the driving event. The method may further comprise receiving, by the application, and from an operating system of the mobile phone, audio routes available to the operating system to output audio during the drive. The method may further comprise determining, by the application, that a user of the mobile phone is driving the vehicle based on the audio routes available to the operating system during the drive. The method may further comprise providing, by the application, the notification to a user of the mobile phone in response to determining that user of the mobile phone is driving the vehicle.

In some embodiments, determining that the user of the mobile phone is driving the vehicle comprises determining, by the application, that the audio routes comprise a first audio route from one or more predefined audio routes. In some embodiments, the one or more predefined audio routes are defined by: determining, by the application, that the mobile phone is disposed in any vehicle during a plurality of previous drives; receiving, by the application, and from the operating system of the mobile phone, information about an active audio route during each drive of the plurality of previous drives; determining, by the application, that the active audio route for a predefined threshold number of drives is a same audio route; and storing, by the application, and in a memory of the mobile phone, the information about the same audio route in a predefined audio routes datastore.

In some embodiments, the method further comprises determining, by the application, that the same audio route is a wired or wireless connection between the mobile phone and a vehicle interface. In some embodiments, determining that the user of the mobile phone is driving the vehicle further comprises determining, by the application, that the first audio route was discovered by the operating system at a beginning of the drive. In some embodiments, determining that the user of the mobile phone is driving the vehicle further comprises determining, by the application, that the mobile phone is actively connected to the first audio route. In some embodiments, the mobile phone is not actively connected to the first audio route and determining that the user of the mobile phone is driving the vehicle further comprises determining, by the application, that the mobile phone connected to the first audio route between a first time corresponding to a beginning of the drive and a second time at which the driving event occurred.

In some embodiments, the audio routes comprise a speaker interface of the mobile phone and at least one of: a wired or wireless connection between the mobile phone and an audio output device. In some embodiments, generating the notification of the driving event comprises generating, by the application, digital signals representing an audible alert of the occurrence of the driving event. In some embodiments, providing the notification to the user of the mobile phone comprises transmitting, by the application, the digital signals to an active audio route of the audio routes available to the operating system to produce the audible alert at a speaker connected to the active audio route. In some embodiments, providing the notification to the user of the mobile phone comprises transmitting, by the application, the digital signals to a predefined audio route of the audio routes available to the operating system to produce the audible alert at a speaker connected to the predefined audio route.

In some embodiments, driving activity detection and attribution system is provided. The system may comprise a mobile device. The mobile device may comprise: an audio interface; a motion sensor arrangement; one or more processors coupled to the audio interface and the motion sensor arrangement; and a memory storing a set of instructions. The instruction, when executed by the one or more processors, may cause the one or more processors to perform operations comprising determining that the mobile device is disposed in a vehicle during a drive. The operations may further comprise receiving from the motion sensor arrangement, movement measurements indicating motion of the mobile device caused by a user of the mobile device or movement of the vehicle during the drive. The operations may further comprise analyzing the movement measurements to detect an occurrence of a driving event during the drive. The operations may further comprise generating a notification of the driving event. The operations may further comprise receiving, from the audio interface, audio routes available to the audio interface to output audio during the drive. The operations may further comprise determining that the user of the mobile device is driving the vehicle based on the audio routes available to the audio interface during the drive. The operations may further comprise providing the notification to the user of the mobile device in response to determining that user of the mobile device is driving the vehicle.

In some embodiments, determining that the user of the mobile device is driving the vehicle comprises determining that the audio routes comprise a first audio route from one or more predefined audio routes. In some embodiments, the operations further comprise defining the one or more predefined audio routes by: determining that the mobile device is disposed in any vehicle during a plurality of previous drives; receiving, from the audio interface, information about an active audio route during each drive of the plurality of previous drives; determining that the active audio route for a predefined threshold number of drives is a same audio route; and storing the information about the same audio route in a predefined audio routes datastore.

In some embodiments, the operations further comprise determining that the same audio route is a wired or wireless connection between the mobile device and a vehicle interface. In some embodiments, determining that the user of the mobile device is driving the vehicle further comprises determining that the first audio route was discovered by the audio interface at a beginning of the drive. In some embodiments, determining that the user of the mobile device is driving the vehicle further comprises determining that the audio interface is actively connected to the first audio route. In some embodiments, the audio interface is not actively connected to the first audio route and determining that the user of the mobile device is driving the vehicle further comprises determining that the audio interface connected to the first audio route between a first time corresponding to a beginning of the drive and a second time at which the driving event occurred.

In some embodiments, a non-transitory machine-readable storage medium is provided, including instructions that, when executed by one or more processors of a mobile device, cause the one or more processors to perform operations comprising determining that the mobile device is disposed in a vehicle during a drive. The operations may further comprise receiving, from a sensor arrangement of the mobile device, movement measurements indicating motion of the mobile device caused by a user of the mobile device or movement of the vehicle during the drive. The operations may further comprise analyzing the movement measurements to detect an occurrence of a driving event during the drive. The operations may further comprise generating a notification of the driving event. The operations may further comprise receiving, from an audio interface of the mobile device, audio routes available to the audio interface to output audio during the drive. The operations may further comprise determining that the user of the mobile device is driving the vehicle based on the audio routes available to the audio interface during the drive. The operations may further comprise providing the notification to the user of the mobile device in response to determining that user of the mobile device is driving the vehicle.

Numerous benefits are achieved by way of the present invention over conventional techniques. For example, embodiments of the present invention provide methods and systems that utilize active audio routes for a mobile device to determine when a user of the mobile device is actively driving a vehicle. As a result, mobile devices may selectively acquire, process, and report sensor data attributable to various driving activities. Because mobile device sensors can continuously generate data, it may take significant computing resources to receive, store, manage, and process all such data. However, by only collecting and processing sensor data when it is determined that the user of the mobile device is actively driving a vehicle, the energy, storage, and processing bandwidth of the mobile device may be conserved. Furthermore, actions performed by the mobile device that are intended to notify a user to various driving activities can be effectively filtered to those times when they will actually be effective at modifying the user's driving tendencies.

### BRIEF DESCRIPTION OF THE DRAWINGS

Aspects of the present disclosure now will be described more fully hereinafter with reference to the accompanying drawings, which are intended to be read in conjunction with both this summary, the detailed description and any preferred and/or particular embodiments specifically discussed or otherwise disclosed. The various aspects may, however, be embodied in many different forms and should not be construed as limited to the embodiments as set forth herein; rather, these embodiments are provided by way of illustration only and so that this disclosure will be thorough, complete, and will fully convey the full scope to those skilled in the art.
FIG. 1 illustrates an embodiment of a system for detecting and associating driving activities to a user based on available audio routes according to aspects of the present disclosure.
FIG. 2 illustrates a simplified block diagram of a system that includes a mobile device configured to detect and associate driving activities to a user according to aspects of the present disclosure.
FIG. 3 illustrates an example of a method of detecting and associating available audio routes to a user's operation of a vehicle according to aspects of the present disclosure.
FIG. 4A illustrates an exemplary graphical user interface for managing audio routes associated with a user operating a vehicle according to aspects of the present disclosure.
FIG. 4B illustrates an exemplary graphical user interface for managing preferences of associated audio routes according to aspects of the present disclosure.
FIG. 5 illustrates an example of a method of determining that a user of a mobile device is driving a vehicle based on available audio routes according to aspects of the present disclosure.
FIG. 6 illustrates an example of a method of selectively alerting a user to unsafe driving activities based on available audio routes according to aspects of the present disclosure.

### DETAILED DESCRIPTION OF SPECIFIC EMBODIMENTS

While certain embodiments are described, these embodiments are presented by way of example only and are not intended to limit the scope of protection. The apparatuses, methods, and systems described herein may be embodied in a variety of other forms. Furthermore, various omissions, substitutions, and changes in the form of the example methods and systems described herein may be made without departing from the scope of protection.

Mobile phones equipped with a myriad of sensors have become ubiquitous. These sensors capture motion data that can unveil extensive information about a mobile phone's surroundings and the activities engaged in by its user, such as walking, running, or riding in a vehicle. Moreover, this data enables detailed analysis of the performance of these activities. For example, motion of a mobile phone disposed within a moving vehicle can be harnessed to discern various driving characteristics, such as average and instantaneous vehicle speed, longitudinal and lateral acceleration, location, elevation, and relative vehicle orientation in the real-world, among others.

Real-time insights about a vehicle's movements garnered from the sensors of a mobile device can offer corresponding revelations into driving tendencies, capabilities, and the overall risk or likelihood of a driver being involved in an accident. As such, monitoring a driver's real-time driving tendencies presents advantages for insurance companies, employers, training agencies, and the public at large. For instance, providing a driver with real-time feedback on safe and unsafe driving maneuvers can empower them to recognize and avoid hazardous driving behaviors in the future, thereby reducing their own risks of being involved in an accident as well as reducing the risk they pose to others.

However, utilization of motion data from mobile devices to monitor driving abilities also presents challenges that must be addressed. One significant challenge lies in accurately attributing driving behaviors to the correct driver. While mobile phones are generally associated with a single user, users may not always be the driver of a vehicle. Thus, while motion of a mobile phone can be used to reliably predict when a user is travelling in a vehicle, the movements of the vehicle may not always be attributable to the user, as is the case when the user is a passenger in a vehicle.

Furthermore, the endeavor to monitor driving abilities via mobile devices must navigate the delicate balance of resource consumption. Continuous monitoring of motion data, particularly in real-time, can exert considerable strain on the device's resources such as battery life and processing power. Moreover, transmitting and processing large volumes of data in real-time can incur substantial bandwidth usage, posing challenges for mobile networks and potentially leading to increased data costs for users. Consequently, there is a pressing need for efficient data processing techniques and optimization strategies to minimize resource consumption while maintaining the efficacy of driving behavior monitoring systems.

Embodiments described herein address these and other challenges associated with using the motion of a mobile device to detect and report driving activities of a user by providing systems and methods for more accurately determining when the user of a mobile device disposed within a vehicle is actively driving the vehicle. In response to determining that the mobile device is disposed within a vehicle during a drive, one or more operating parameters of the mobile device may be obtained and stored for future reference, such as active and/or available audio connections during the drive. After determining that one or more operating parameters are consistently observed across multiple discrete drives, the particular operating parameters may be associated with the user of the mobile device driving a vehicle. Upon subsequently detecting that the mobile device is disposed within a vehicle during a drive, and that the current operating parameters are consistent with the previous operating parameters associated with the user driving a vehicle, a determination that the user is driving the vehicle during the current drive may be made.

The systems and methods described herein may represent numerous improvements and benefits over existing technology. For example, by identifying unique mobile device operating parameters that are primarily, if not only, associated with a user of the mobile device actively driving a vehicle, drives and driving activities that may be incorrectly attributed to the user may be reduced or eliminated, such as when the user is a passenger in a vehicle as opposed to the driver of the vehicle. In these instances, the mobile device may conserve resources by reducing subsequent data collection and analysis for the remainder of the drive. Furthermore, unnecessary data transmission and storage may be reduced by ignoring drives and detected driving activities that are not attributable to the user of a mobile device. As a result, the data and analysis that is collected may include a more accurate representation of the user's driving tendencies, which can enable insurance companies and other interested parties to more accurately assess the risk or likelihood of the user being involved in an accident. Additionally, by accurately determining when a user of a mobile device is driving a vehicle, as opposed to times when the user is merely a passenger, actions that may be automatically performed by the mobile device in response to detecting various driving activities may be filtered to avoid unnecessarily disturbing the user when the activities are not attributable to the user.

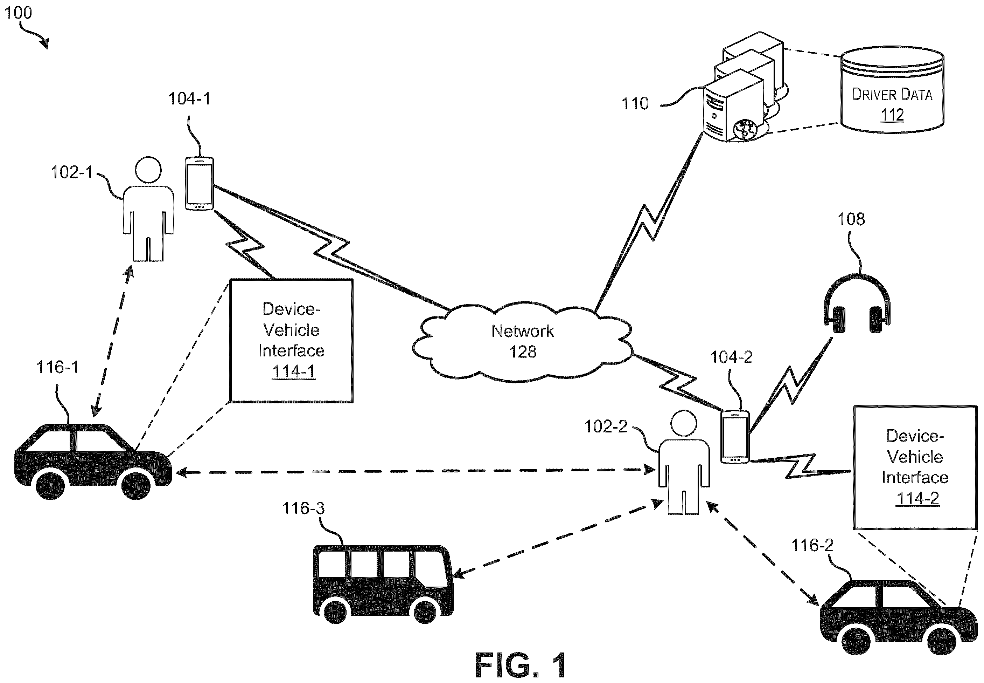

Further detail regarding the use of mobile device operating parameters to attribute driving activities is provided in relation to the figures. FIG. 1 illustrates an embodiment of a system 100 for detecting and associating driving activities to a user based on available audio routes. System 100 can include: vehicle telematics server system 110, data store 112, one or more mobile devices 104, and one or more vehicles 116. In some embodiments, one or more of the components of system 100 may be communicatively connected to other components of system 100 via network 128.

Vehicle telematics server system 110 can include one or more processors configured to perform various functions, such as detecting the occurrence of unsafe driving activities from telematics data provided by mobile devices 104, managing user preferences, and controlling one or more operations of mobile devices 104 based on detected driving activities and user preferences. Vehicle telematics server system 110 can include one or more physical servers running one or more processes. Vehicle telematics server system 110 can also include one or more processes distributed across a cloud-based server system.

Network 128 can include one or more wireless networks, wired networks, public networks, private networks, and/or mesh networks. For example, network 128 can include one or more local area networks (LANs) connected to one or more wide area networks (WANs), such as the Internet. Additionally, or alternatively, network 128 may include one or more cellular and/or satellite-based communications networks.

Vehicle telematics server system 110 may receive driving data, or telematics data, via network 128 attributable to movement of one or more vehicles. Driving data may be derived from sensor data measurements collected from telematics devices, including but not limited to sensor-equipped smartphones, Internet of Things (IoT) devices such as DriveWell Tags^{®} and on-board diagnostics (OBD) II devices, and data from connected vehicles with embedded telematics capabilities. For example, driving data for a particular vehicle, such as first vehicle 116-1, may be collected and/or transmitted by the vehicle itself, and/or one or more devices disposed within the vehicle. For example, first mobile device 104-1 disposed within first vehicle 116-1 during a drive may collect driving data attributable to the movement and/or operation of first vehicle 116-1 during the drive.

Mobile devices 104 may be a smartphone, tablet computer, laptop computer, gaming device, or some other form of computerized device that can collect, process, transmit, and receive one or more types of data, such as motion, location, and/or driving data. While not illustrated, system 100 may further include one or more telematics devices. Telematics devices may be special purpose computers that can be permanently or semi-permanently installed within and/or communicatively connected to a vehicle, such as vehicles 116. For example, a telematics device may be fixed to an interior surface of a vehicle, such as a windshield, engine compartment, and the like. Additionally, or alternatively, telematics devices may be coupled to a data port, such as an OBD port and/or universal serial bus (USB) port of a vehicle. Once fixed to the vehicle and/or connected with a data port, telematics devices may collect, process, transmit, and receive one or more types of data, such as motion, location, and/or driving data, as described further herein.

Mobile devices 104 may each include one or more processors configured collect, analyze, and transmit telematics data attributable to movement and/or operation of a vehicle. For example, mobile devices 104 may include one or more sensors, such as a Global Positioning System (GPS) receiver, one or more accelerometers, one or more gyroscopes, one or more compasses, one or more magnetometers, one or more barometers, and the like, that can be used to collect motion data attributable to a vehicle's movements and/or operations. Additionally, or alternatively, mobile devices 104 may collect and/or receive vehicle operating data, such as vehicle speed, compass headings, and the like, from one or more components of a vehicle, such as an Engine Control Unit (ECU), Transmission Control Unit (TCU), and the like. Motion data and/or vehicle operating data collected while driving may be referred to as driving data or telematics data.

In some embodiments, motion and/or driving data collected during a drive are analyzed to detect driving activities. For example, based on acceleration and velocity data attributable to movements of a vehicle during a drive, one or more instances of speeding, hard braking, harsh acceleration, excessive speeding, hard cornering, and the like that occurred during the drive may be detected. As another example, based on motion data collected by a mobile device and/or one or more user inputs on the mobile device indicative of mobile device usage that tends to draw attention away from the road (e.g., texting, hand-held phone calls, hand-held phone motion, etc.), one or more instances of distracted driving may be detected. In yet another example, driving data may be used to identify the occurrence of a vehicle accident. The location and timing of driving activities may be determined based on location data collected at or near in time to the data used to detect the risk-related driving events. Using the location and timing of driving activities, contextual data related to the surrounding environment at the time when a particular driving activity may be determined (e.g., by querying a remote data source).

While described herein as instances of unsafe driving activities, motion, driving, and/or telematics data may be further analyzed to identify the absence of unsafe driving activities and/or instances of safe driving activities and patterns. For example, based on a rate of deceleration from an initial velocity to a complete stop, an instance of safe braking may be identified. As another example, the incidence of an unsafe driving activity, such as the number of hard brakes, may be compared to the overall number of driving activities, such as the number of total braking events, to determine the frequency, rate, and/or probability of each braking event being a hard braking event.

Mobile devices 104 may include one or more software and/or hardware components for communicating with vehicles 116, vehicle telematics server system 110, and/or one or more other electronic devices, such as audio device 108. For example, mobile devices 104 may include one or more universal serial bus (USB) ports, a Wi-Fi interface, a Bluetooth interface, or a similar wired or wireless communication interface that enables mobile devices 104 to communicate with device-vehicle interfaces 114. Device-vehicle interfaces 114 may include one or more types of multimedia interfaces provided by vehicles 116. For example, device-vehicle interfaces may include a Bluetooth connection that enables mobile devices 104 to use the stereo of a vehicle as an audio route for playing music or other audio through the speakers of the vehicle. As another example, device-vehicle interfaces may allow mobile devices 104 to control one or more functions of vehicles 116, such as a display, and to receive control inputs from one or more user interfaces of vehicles 116.

Vehicle telematics server system 110 may include, or otherwise be connected to, data store 112. For example, data store 112 may include one or more databases accessible and/or managed by one or more processes executing on vehicle telematics server system 110. Data store 112 may store driving activity data, user preferences, vehicle information, or the like for users 102. For example, data store 112 may include collections of vehicle telematics data for each individual user. For example, data store 112 may include a first collection of telematics data for first user 102-1 and a second collection of telematics data for second user 102-2. Each collection of vehicle telematics data may include raw telematics data collected by a mobile device associated with a user. For example, the collection of data for first user 102-1 may be collected and received from first mobile device 104-1 for drives in which first user 102-1 was the driver, and the collection of data for second user 102-2 may be collected and received from second mobile device 104-2 for drives in which second user 102-2 was the driver.

Raw telematics data may refer to the unprocessed, unfiltered information gathered from various sensors and sources within a mobile device, such as mobile devices 104, that pertain to a vehicle's operation and surrounding environment. This data may include GPS coordinates, accelerometer and gyroscope readings for measuring acceleration, braking, and vehicle orientation, vehicle speed, or the like. In some embodiments, such data further includes engine Revolutions Per Minute (RPM), fuel level, and other relevant vehicle parameters obtained via Bluetooth or OBD-II interfaces. Additionally, raw telematics data may encompass contextual information such as timestamps, weather conditions, and traffic congestion obtained from network connections or other external sources. The collected telematics data may be stored in a structured format, such as JavaScript Object Notation (JSON) or Comma-Separated Values (CSV), ready for further processing and analysis to derive insights into driving behavior, vehicle performance, and environmental conditions. In some embodiments, the raw telematics data is saved for a minimum number of most recent drives or trips in a vehicle, such as the last 5 drives, 10 drives, 15 drives, or a similar number of drives.

Each collection of vehicle telematics data may additionally, or alternatively, include processed telematics data. Processed telematics data may refer to the refined and analyzed information derived from raw telematics data collected by a mobile device or other telematics device. This processed data undergoes various algorithms, statistical methods, and data fusion techniques to extract meaningful insights and actionable intelligence related to vehicle operation, driver behavior, and environmental conditions. For example, such information may include routes traveled by a driver for each drive, details about the occurrence of one or more unsafe driving activities (e.g., times, locations, and severities of one or more hard braking, speeding, mobile device usage, swerving, hard acceleration, or other similar unsafe driving activities), contextual data about each drive (e.g., time-of-day, weather, traffic, road-type, extrinsic road risk), whether a crash was detected during the drive, information about a vehicle used for the drive (e.g., vehicle make, model, and year, information about device-vehicle interfaces, or the like), and other similar information attainable from sensors of a mobile device, the operating system of the mobile device, or reportable by a user for a drive. Processing raw telematics data may involve tasks such as filtering out noise, aggregating data over specific time intervals, identifying patterns and anomalies, and calculating metrics such as average speed, fuel efficiency, acceleration rates, and harsh driving events.

Data store 112 may store information about individual users and/or groups of users. Such information may include biographical information about each individual user who is a driver, relational information (e.g., for groups of users who frequently drive together, who share a vehicle, who are insured on a same policy, or the like), mobile devices associated with a user, or the like. For example, information about first user 102-1 may indicate that they are associated with first mobile device 104-1 and that they are related to second user 102-2, who may be associated with second mobile device 104-2. User information may further include vehicular information (e.g., make, model, and year) for vehicles driven by a user, vehicle usage statuses (e.g., whether a vehicle is the primary vehicle driven by a user or a secondary vehicle), or the like. For example, vehicular information for first user 102-1 may indicate that the only vehicle they drive is first vehicle 116-1 while vehicular information for second user 102-2 may indicate that second vehicle 116-2 is the primary vehicle for second user 102-2 but that they occasionally drive first vehicle 116-1. Vehicular information for second user 102-2 may further indicate that second user 102-2 is frequently a passenger in third vehicle 116-3, which may be a public transportation vehicle, a taxi, a rideshare vehicle, or the like.

Information about an individual user may further include one or more scores for various driver metrics, such as an overall driver score indicative of whether a driver generally operates vehicles in a safe or unsafe manner, individual driving activity scores indicative of the frequency with which the driver performs and/or avoids particular driving activities (e.g., driving the speed limit vs. speeding, hard braking, distracted vs. focused driving, yielding the right-of-way, or the like), intrinsic risk assessments indicating the likelihood on any given drive that a user will cause an accident (e.g., based on driver score, vehicular information, historical driving behavior, or the like), extrinsic risk assessments indicating the likelihood on any given drive that a user will be involved in an accident that they did not cause (e.g., based on extrinsic risk factors), overall risk assessments indicating the likelihood on any given drive that a user will be involved in an accident of any kind (e.g., based on intrinsic and extrinsic risk assessments), effectiveness of one or more methods of influencing how a user operates a vehicle (e.g., the degree to which a particular driving activity is reduced in response to one or more stimuli provided to a user), or the like.

In some embodiments, vehicle telematics server system 110 receives and stores information about users from users themselves. For example, biographical, relational, vehicular, and other information may be provided by a user during an on-boarding process, such as when creating a user account or profile, when applying for an insurance policy, or the like. Additionally, or alternatively, vehicle telematics server system 110 may generate and/or modify user information based on driving activity data collected by a mobile device, such as mobile devices 104, during one or more drives in which a user is determined to be the driver. For example, by analyzing raw and/or processed telematics data from a plurality of recent drives, vehicle telematics server system 110 may generate an overall driver score and/or individual driving activity scores, determine common routes and destinations traveled by a user, or the like.

Data store 112 may store information about individual user preferences and/or device preferences. Such preferences may control how vehicle telematics server system 110 and/or mobile devices 104 collect, analyze, report, and respond to various driving activities. For example, user preferences may indicate whether a user wishes to receive analysis of their driving activities, such as their driving scores, tips for improving their score, general risk profile, or the like, their preferred methods of receiving such analysis, preferred characteristics for each method, or the like. User preferences may be provided by users and/or learned from actions or inactions of a user.

Vehicle telematics server system 110 may learn user preferences by analyzing raw and/or processed telematics data for a user after providing the user with one or more forms of analysis or feedback. For example, after providing a summary of a user's driving activity for a particular drive, or a number of most recent drives, telematics data for one or more subsequent drives may be analyzed to determine whether, and to what degree, the telematics data indicates that the driver improved their driving performance. Vehicle telematics server system 110 may then compare the results with similar results obtained after providing a user with an alert in real-time upon detecting an unsafe driving activity, results obtained after providing the user with an alert upon detecting a number of similar driving activities, and/or other methods of providing alerting the user to determine which method had a greater impact on reducing future unsafe driving activities. Vehicle telematics server system 110 may create and store a user preference indicating that the method, or a particular combination of methods, of providing feedback and/or alerts that resulted in the greatest impact is the preferred method.

Device preferences may include information about the preferred operating state of a mobile device while a user is driving a vehicle. The operating state of a mobile device may include whether a user typically sets their device to a driving mode in which non-essential applications, notifications, or other similar features are disabled or suppressed while they are driving to avoid unnecessary distractions. The operating state of a mobile device may further indicate whether the mobile device is typically connected to a device-vehicle interface while the user is driving. For example, device preferences for first mobile device 104-1 may indicate that first mobile device 104-1 typically connects to first device-vehicle interface 114-1 of first vehicle 116-1 when first user 102-1 is driving. As another example, device preferences for second mobile device 104-2 may indicate that second mobile device 104-2 typically connects to either of first device-vehicle interface 114-1 of first vehicle 116-1 or second device-vehicle interface 114-2 of second vehicle 116-2 when second user 102-2 is driving. Device preferences may further include information about active and/or available connections while a user is driving a vehicle. For example, device preferences may include information about the connection between first mobile device 104-1 and first device-vehicle interface 114-1, such as the connection protocol, identifying information for the connection, or the like.

Additionally, or alternatively, device preferences may include information about the operating state of a mobile device while a user is a passenger in a moving vehicle but is not driving. For example, such preferences may indicate that when second mobile device 104-2 is connected to audio device 108 (e.g., wireless headphones) during a drive, user 102-2 is a passenger in third vehicle 116-3.

Device preferences may be provided by a user or learned by mobile devices 104 and/or vehicle telematics server system 110 over time. For example, after determining that first user 102-1 is in a moving vehicle, first mobile device 104-1 may monitor and store the operating states, including the active and available connections, in association with a record of each of a plurality of drives. First mobile device 104-1 and/or vehicle telematics server system 110 may analyze the operating states to identify common and/or anomalous operating states for a collection of most recent drives. For example, first mobile device 104-1 and/or vehicle telematics server system 110 may determine the percentage of drives during which each operating state is observed. Based on the analysis, first mobile device 104-1 and/or vehicle telematics server system 110 may determine the preferred operating state of first mobile device 104-1 when first user 102-1 is driving. For example, based on determining that first mobile device 104-1 connected to first device-vehicle interface 114-1 for more than a threshold number of the detected drives, or that the percentage of detected drives during which first mobile device 104-1 connected to first device-vehicle interface 114-1 is greater than the percentage of detected drives during which first mobile device 104-1 did not connect to first device-vehicle interface 114-1, first mobile device 104-1 and/or vehicle telematics server system 110 may determine that the preferred operating state when first user 102-1 is driving includes first mobile device 104-1 being connected to first device-vehicle interface 114-1.

In some embodiments, device preferences are set and/or managed by users. For example, after detecting that first mobile device 104-1 frequently connects to first device-vehicle interface 114-1 during detected driving events, first mobile device 104-1 and/or vehicle telematics server system 110 may request confirmation from user 102-1 that this is the preferred connection while user 102-1 is driving vehicle 116-1.

In response to determining that a user is travelling in a vehicle, as described further herein, vehicle telematics server system 110 and/or mobile devices 104 may use historical device preferences and current operating states to determine whether the user is actively driving the vehicle or not. For example, in response to detecting that first mobile device 104-1 is disposed within a moving vehicle, an application executing on first mobile device 104-1 may query the operating system of first mobile device 104-1 for the current operating states, such as the active or available connections. The application may then compare the current operating states with the preferred operating states to determine whether first user 102-1 is in their own vehicle and/or actively driving the vehicle. For example, by determining that the current operating state of first mobile device 104-1, which indicates that first mobile device 104-1 is actively connected to first device-vehicle interface 114-1, matches the preferred device operating state, the application may determine that user 102-1 is driving the vehicle.

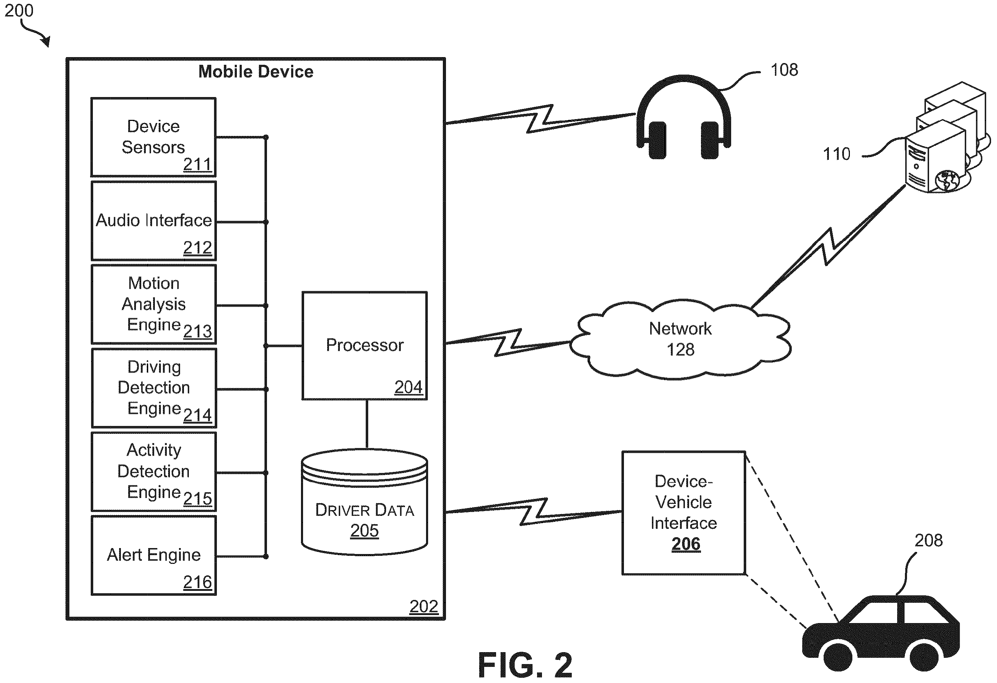

These and other methods of determining whether a user of a mobile device is currently driving a vehicle, as well as the various applications of such a determination, are described in relation to FIGS. 2-6. FIG. 2 illustrates a simplified block diagram of a system 200 that includes a mobile device 202 configured to detect and associate driving activities to a user according to aspects of the present disclosure. System 200 may include the same or similar components as system 100 described above. For example, system 200 may include vehicle telematics server system 110, network 128, and vehicle 208. Vehicle 208 may include device-vehicle interface 206 that enables mobile device 202 to connect and transmit data to/from one or more components of vehicle 208, such as a stereo, multimedia interface (MMI), speaker, display, Engine Control Unit (ECU), or the like.

As described herein, mobile device 202 may include one or more software and/or hardware components configured to determine whether a user of mobile device 202 is driving a vehicle, collect and analyze telematics data associated with operation of the vehicle to detect driving activities, and cause mobile device 202 to perform one or more actions in response. For example, and as illustrated, mobile device 202 may include: device sensors 211, audio interface 212, motion analysis engine 213, driving detection engine 214, activity detection engine 215, and alert engine 216. As further illustrated, mobile device 202 can include one or more data stores and/or databases, such as driver data 205. Driver data 205 may include some or all of the information described above in relation to data store 112 for a particular user of mobile device 202. For example, driver data 205 may include raw and processed telematics data, user information, vehicle information, user preferences, device preferences, or the like. Mobile device 202 may further include processor 204 that can coordinate the execution of the various functionalities provided by the plurality of hardware and/or software services, in addition to communicating with the one or more data stores and/or databases.

Device sensors 211 may include one or more hardware and/or software sensors that measure information about mobile device 202 and its surroundings. For example, device sensors 211 may include an accelerometer that measures movements and orientation of mobile device 202, a gyroscope that measures rotation about one or more axes, a magnetometer that measures orientation relative to magnetic north, a Global Navigation Satellite System (GNSS) receiver that measures location and elevation, a proximity sensor that measures distances to nearby objects, an ambient light sensor, a barometer for measuring atmospheric pressure, a temperature sensor for measuring environmental or internal device temperature, and one or more cameras for capturing images and videos across one or more spectrums if visible and invisible light.

Measurements from device sensors 211 may be sampled by processor 204 in response to requests for measurements from motion analysis engine 213, driving detection engine 214, and/or activity detection engine 215. For example, in response to a request, processor 204 may begin sampling and storing signal values for a particular sensor. Requests from the various components may include indications of the desired data collection frequency or resolution. For example, components may request that measurements be sampled at increased frequencies and/or higher resolutions to enable more accurate assessments of the motions experienced by mobile device 202 (e.g., to detect fine movements). As another example, components may request that measurements be sampled at reduced frequencies and/or lower resolutions to save resources (e.g., battery and processing power) when making general assessments, such as determining whether acceleration measurements, changes in location, or the like are attributable to a user walking or traveling in a vehicle.

Processor 204 may store collections of measurements from device sensors 211 in a memory of mobile device 202. For example, processor 204 may store measurements from device sensors 211 in driver data 205 and/or a cache maintained by an operating system of mobile device 202. The most recent measurements sampled by processor 204 up to a predefined time in the past may be stored, such as for the last five minutes, the last hour, the last day, or a similar amount of time, and/or the most recent measurements may be stored up to a maximum storage size. As new measurements are sampled, the oldest measurements may be deleted.

Audio interface 212 may include one or more software and/or hardware components that process and output audio data for playback via one or more types of audio routes. Audio routes may include one or more physical audio components of mobile device 202, such as one or more built-in speakers, headphone ports, or similar components that convert analog audio signals into audible sounds. Audio interface 212 may include a digital-to-analog converter (DAC) that can converts digital audio data into analog signals for output by physical audio components. Audio routes may include one or more wired or wireless data connections. For example, mobile device 202 may include a physical USB port or similar data connection that enables mobile device 202 to be physically connected to another device, such as a computer, a stereo, vehicle 208, or the like, to transfer data back and forth. Wireless data connections may include Bluetooth connections, Wi-Fi connections, or the like, that enable mobile device 202 to transfer data between mobile device 202 and another device. For example, audio interface 212 may enable mobile device 202 to transfer audio data, map data, contact data, text data or the like to device-vehicle interface 206.

Audio interface 212 may include one or more processes for detecting available audio routes. For example, audio interface 212 may determine that a wired data connection includes audio playback capabilities. Audio interface 212 may cause a radio component of mobile device 202 to scan for available wireless connections, such as available Bluetooth channels. Audio interface 212 may cause mobile device 202 to scan for available wireless connections on a periodic, semi-periodic, or on demand basis. For example, in response to a user input at a user interface of mobile device 202, audio interface 212 may cause mobile device 202 to begin scanning for and identifying available wired or wireless audio routes. In response to input via a user interface of mobile device 202, audio interface 212 may establish a connection with an available wired or wireless audio route and begin routing audio data output from one or more processes of mobile device 202 through the connected audio route.

Audio interface 212 may maintain a list of historical audio routes. The list of historical audio routes may include historical audio routes previously selected for audio output by a user of mobile device 202. Upon detecting that a historical audio route is available, audio interface 212 may automatically establish a connection with the historical audio route and begin routing audio data through the connected audio route. Audio interface 212 may maintain preferences associated with historical audio routes. Preferences associated with historical audio routes may reflect a user's preferred historical audio route when multiple historical audio routes are available. In some embodiments, audio interface 212 identifies the type of audio route for each audio route in the list of historical audio routes. For example, audio interface 212 may identify one or more audio routes as being associated with a particular vehicle or audio output device of a vehicle. Audio routes that are identified as being associated with a vehicle's entertainment and/or audio output system may be interpreted (e.g., by driving detection engine 214) as indicia that the user of the mobile device is in their own vehicle.

Motion analysis engine 213 may include one or more processes for receiving, transforming, and/or analyzing signals from device sensors 211. As described above, raw signals may be received from one or more sensors, such as one or more accelerometers, one or more magnetometers, one or more gyroscopes, one or more GNSS receivers, one or more barometers, one or more thermostats, or the like. Motion analysis engine 213 may convert raw sensor signals into measurements of motion experienced by mobile device 202, the relative orientation of mobile device 202 with respect to its surroundings, and/or measurements about the surrounding environment, such as changes in air pressure, ambient noise, temperature, or the like. In some embodiments, motion analysis engine 213 analyzes motion, orientation, and/or environmental measurements to determine an activity being performed by a user in relation to mobile device 202. Activities detectable by motion analysis engine 213 may include whether a user is stationary, walking, running, bicycling, driving, interacting with mobile device 202, or the like.

Motion analysis engine 213 may include one or more processes for analyzing motion, orientation, and/or environmental measurements for mobile device 202. Driving detection engine 214 may analyze the motion, orientation, and/or environmental measurements from device sensors 211 to determine whether mobile device 202 is disposed in a vehicle during a drive. Motion analysis engine 213 may determine that mobile device 202 is disposed in a vehicle during a drive based on a determination that mobile device 202 accelerated at a rate consistent with vehicular motion, that mobile device 202 is travelling at a speed consistent with vehicular motion, or the like. In some embodiments, motion analysis engine 213 analyzes measurements to distinguish between motion caused by a vehicle or other motion, such as a user physically interacting with mobile device 202. Motion analysis engine 213 may execute one or more filters on the motion and/or orientation data to distinguish between motion caused by a vehicle or other motion. Filtering the data may include executing one or more software and/or hardware filters on measurements in the frequency domain, such as one or more low-pass filters, band-pass filters, high pass filters, infinite impulse response filters, or the like. Additionally, or alternatively, filtering the data may include inputting measurements into a trained machine learning model and/or neural network.

Motion analysis engine 213 may include one or more processes for detecting and recording vehicle dynamics during a drive, such as lateral and longitudinal accelerations, current and average speed, or the like. Motion analysis engine 215 may analyze motion attributable to a vehicle to determine the one or more components of the vehicle's dynamics during a drive. Motion analysis engine 213 may input motion and/or orientation measurements attributable to a vehicle to one or more machine learning models and/or neural networks to determine the one or more components of the vehicle's dynamics. Motion analysis engine 213 may record vehicle dynamics in association with individual drives, such as in a drive database and/or in driver data 205.

Driving detection engine 214 may include one or more processes for determining whether a user associated with mobile device 202 is actively driving a vehicle and/or if mobile device 202 is disposed in a vehicle associated with the user. Driving detection engine 214 may determine whether the user is actively driving in response to an indication from motion analysis engine 213 that mobile device 202 is disposed within a vehicle during a drive. While described as a determination of whether a user is actively driving a vehicle, such a determination can include a determination the user is in control of the vehicle's operation regardless of whether the vehicle is actively moving.

Driving detection engine 214 may determine that the user is driving the vehicle based on available and/or active audio/data connections from audio interface 212. For example, in response to an indication that mobile device 202 is disposed within a vehicle, such as vehicle 208, during a drive, driving detection engine 214 may request a list of available audio routes from audio interface 212. Additionally, or alternatively, driving detection engine 214 may request a list of active audio routes from audio interface 212. Driving detection engine 214 may compare information for available and/or active audio routes with information for historical and/or preferred audio routes identified as being associated with a vehicle, and/or with the user driving a vehicle, to determine whether a match exists. In response to determining that a match exists, driving detection engine 214 may determine that the user is in their own vehicle and/or is driving the vehicle. On the other hand, driving detection engine 214 may determine that the user is not driving a vehicle, and is instead a passenger, in response to determining that a match does not exist.

Preferred audio routes identified as being associated with the user driving a vehicle may be stored in driver data 205. Driving detection engine 214 may automatically identify an audio route as a preferred audio routes based on the number of drives during which the audio route is available and/or active. For example, in response to determining that a match between the list of available and/or active audio routes and the preferred audio routes does not exist, such as in the case when there are no preferred audio routes, driving detection engine 214 may identify one or more of the available and/or active audio routes as potential preferred audio routes.

Additionally, or alternatively, driving detection engine 214 may compare the list of available and/or active audio routes from audio interface 212 with previously identified potential preferred audio routes and increment counters associated with matches. As such, counters may indicate the number of drives during which each potential preferred audio route was available and/or active. When the counter for a potential preferred audio route meets or exceeds predefined threshold criteria, driving detection engine 214 may reclassify the audio route as a preferred audio route. The predefined threshold criteria may include a minimum number of drives, such as 5, 10, 15, or a more drives during which an audio route was available and/or active. Additionally, or alternatively, the predefined threshold criteria may include a minimum number of consecutive drives. The number of drives may be selected to ensure the accuracy of determining that a user of mobile device 202 is actively driving based on available and/or active audio routes.

Driving detection engine 214 may further identify an audio route as a preferred audio route based on input from the user. For example, after determining that an audio route was available and/or active while mobile device 202 was disposed in a vehicle during a drive, driving detection engine 214 may request input from the user to confirm that the user was driving for some or all of the drives during which the audio route was available and/or active. Additionally, or alternatively, driving detection engine 214 may provide a list of historical audio routes detected by audio interface 212 and an option for the user to select one or more audio routes to be associated with the user driving a vehicle.

Driving detection engine 214 may identify multiple preferred audio routes associated with the user driving a vehicle. For example, driving detection engine 214 may identify both a wired and a wireless audio connection between audio interface and device-vehicle interface 206 as being preferred audio routes. Driving detection engine 214 may identify preferred audio routes for individual vehicles associated with a user. For example, after identifying a preferred audio route, driving detection engine 214 may request input from a user identifying a particular vehicle associated with the user and the preferred audio route. Subsequently, driving detection engine 214 can determine that mobile device 202 is disposed within a particular vehicle during a drive based on a determination that the preferred audio route was available and/or active during the drive, regardless of whether the user is actively driving the vehicle.

In some embodiments, driving detection engine 214 determines whether the user of mobile device 202 is actively driving a vehicle based on whether a preferred audio route was available at some point during the drive. For example, in the event that the preferred audio route is not the active audio route, but was observed at some point during the drive (e.g., before another occupant connected to the audio route from a separate device), driving detection engine 214 may determine that the user is actively driving the vehicle.

In some embodiments, driving detection engine 214 identifies audio routes that are not associated with the user driving a vehicle. Driving detection engine 214 may identify active audio routes, such as audio device 108, during times when the user of mobile device 202 is performing another activity that is incompatible with riding in a vehicle, such as when the user is walking, as audio routes that are not associated with the user driving a vehicle. In other words, while such audio routes may be active while the user is driving a vehicle, as in the case where mobile device 202 is connected to headphones or a headset during a drive, driving detection engine 214 may not rely on these audio routes to determine if a user is driving a vehicle. In this way, incorrect assessments of whether a user is driving a vehicle may be reduced.

Activity detection engine 215 may include one or more processes for detecting safe and/or unsafe driving activities. Safe driving activities may include a vehicle traveling at or below a safe or posted speed limit, forward accelerations or decelerations at or below a safe acceleration or deceleration threshold, lateral accelerations at or below a safe lateral acceleration threshold, or the like. Unsafe driving activities may include a vehicle traveling at or above a safe or posted speed limit, forward accelerations or decelerations at or above a safe acceleration or deceleration threshold (e.g., hard braking), lateral accelerations at or above a safe lateral acceleration threshold (e.g., swerving, aggressive lane changes, unsafe cornering), interactions with mobile device 202, or the like. Activity detection engine 215 may analyze driving activity data and/or vehicle dynamic data from motion analysis engine 213 to detect safe and/or unsafe driving activities. For example, activity detection engine 215 may compare driving activity data to one or more thresholds to detect occurrences of safe and/or unsafe driving activities. Additionally, or alternatively, activity detection engine 215 may analyze motion data attributable to a user of mobile device 202 to detect unsafe driving activities, such as when the user is interacting with mobile device 202 in an unsafe or distracting manner.

Activity detection engine 215 may detect driving activities in real-time during a drive. For example, activity detection engine 215 may receive a stream of driving activity data from motion analysis engine 213 as it is collected and converted from device sensors 211. To reduce battery and processing consumption by mobile device 202, activity detection engine 215 may be limited to detecting driving activities performed by the user of mobile device 202. For example, in response to an indication from driving detection engine 214 that the user of mobile device 202 is not driving a vehicle, activity detection engine 215 may stop analyzing driving activity data and/or instruct device sensors 211 and/or motion analysis engine 213 to adjust their operations, such as by reducing the frequency with which sensor measurements are collected by device sensors 211. Additionally, or alternatively, activity detection engine 215 may cause device sensors 211 and/or motion analysis engine 213 to increase data collection and processing in response to determining that the user is driving the vehicle.

Alert engine 216 may include one or more processes for notifying the user of mobile device 202 to safe and/or unsafe driving activities performed by the user. For example, in response to an indication (e.g., from activity detection engine 215) that the user performed an unsafe driving activity and/or maneuver, such as slamming on the brakes, speeding, swerving, or the like, alert engine 216 may cause mobile device 202 to output an indication to the user of the unsafe driving activity. Alert engine 216 may cause mobile device 202 to output one or more types of alerts and/or notifications in response to detecting safe and/or unsafe driving activities. For example, alert engine 216 may generate an audio alert, a haptic alert, a visual alert, or a combination of the three. In some embodiments, the type and/or characteristics of an alert may be specific to the detected driving activity. For example, audio alerts for driving safely may sound different from audio alerts for unsafe driving activities.

Alert engine 216 may provide alerts via available and/or active audio routes. For example, in response to detecting an unsafe driving activity, alert engine 216 may create an audio alert and provide it to audio interface 212 for output via an active audio route. Additionally, or alternatively, alert engine 216 may provide audio alerts to audio interface 212 for output via an available but inactive audio route. For example, while the active audio route for audio interface 212 may be a wired or wireless data connection with device-vehicle interface 206, alert engine 216 may cause audio interface 212 to output an audio alert to an integrated component of mobile device 202, such as an integrated speaker. Audio routes used for alerts may be based on user preferences. User preferences for audio route alerts may be defined by a user. For example, a user may select default and/or preferred audio routes for receiving audio alerts. Such preferences may include preferred audio routes for each vehicle associated with the user.

In some embodiments, alert engine 216 provides alerts in real-time as driving activity is detected by activity detection engine 215 to provide users with instant feedback about their driving performance. Additionally, or alternatively, alert engine 216 may delay alerts to reduce distractions and/or device chatter that could lead to a user disabling alerts altogether. For example, alert engine 216 may delay alerts until after a predefined number of occurrences of a driving activity has been performed during a single drive or during multiple drives.

In some embodiments, alert engine 216 filters, or otherwise silences, alerts based on whether the user of mobile device 202 is driving or is a passenger. For example, in response to an indication that an unsafe driving activity was detected (e.g., by activity detection engine 215), alert engine 216 may determine whether the user of mobile device 202 is actively driving the vehicle in which mobile device 202 is disposed. Alert engine 216 may determine whether the user of mobile device 202 is actively driving the vehicle based on an indication from driving detection engine 214, as described above. For example, it may be determined that the user is driving the vehicle in response to determining that the active audio route from audio interface 212 has been identified as an audio route associated with the user driving a vehicle.

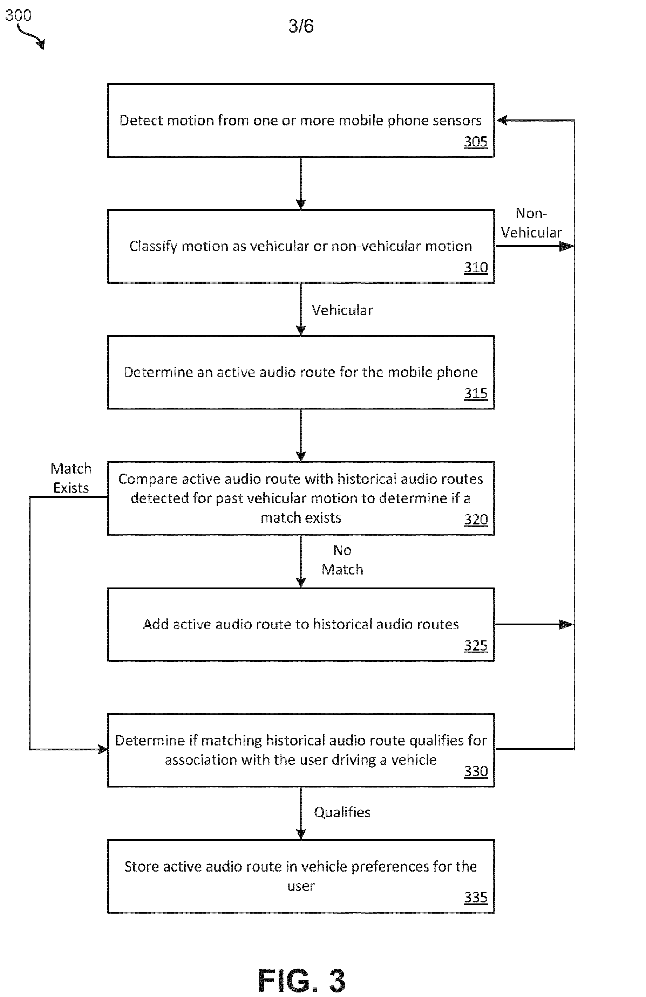

FIG. 3 illustrates an example of a method 300 of detecting and associating available audio routes to a user's operation of a vehicle according to aspects of the present disclosure according to aspects of the present disclosure. One or more blocks of method 300 may be performed by one or more hardware and/or software components of a mobile phone, such as mobile device 202 described above. Additionally, or alternatively, one or more blocks of method 300 may be performed by one or more processes executing on a remote server system, such as vehicle telematics server system 110.

At block 305, motion is detected from one or more mobile phone sensors. As described above, the motion may be detected from signals and/or data generated from mobile phone sensors including: one or more accelerometers, one or more gyroscopes, one or more magnetometers, a barometer, a GNSS receiver, or the like. Detecting motion may include detecting changes in the position and/or orientation of the mobile phone over time. The motion and/or orientation may be detected periodically, semi-periodically, and/or on-demand.

At block 310, the detected motion is classified as vehicular or non-vehicular motion. The detected motion may be classified by one or more components executing on the mobile phone, such as driving detection engine 214 described above. Vehicular motion may refer to detectable changes in the position, movement, and/or orientation of the mobile phone that are caused by, or otherwise attributable to, the movements of a vehicle in which the mobile device is disposed. For example, vehicular motion may include acceleration forces measured by an accelerometer of the mobile phone when the vehicle changes speed or makes a turn. Non-vehicular motion may refer to other changes in the position, movement, and/or orientation of the mobile phone that are not caused by a vehicle. For example, non-vehicular motion may include motion caused by a user picking up the mobile phone or walking with the mobile phone in their pocket. In response to determining that the motion is non-vehicular, method 300 may return to block 305 to continue detecting motion. In response to determining that the motion is vehicular motion, method 300 may proceed to block 315.

At block 315, an active audio route for the mobile phone is determined. The active audio route may be a wired or wireless connection that the mobile phone is currently using to output audio to a speaker or other media playback device, such as audio device 108 and/or device-vehicle interface 206. The active audio route may be determined from an audio interface, such as audio interface 212. In some embodiments, the active audio route is provided by the operating system of the mobile phone. The active audio route may be identified in response to detecting vehicular motion indicating that the mobile phone is disposed in a vehicle during a drive. In some embodiments, available audio routes for the mobile phone are determined. For example, a list of currently, or recently available audio routes may be requested from the operating system of the mobile phone.

At block 320, the active audio route is compared with historical audio routes detected for past vehicular motion to determine if a match exists. Historical audio routes may include audio routes that were available and/or active during previous drives. Identifying information for historical audio routes, such as hardware identifiers, network and/or radio identifiers, device names, or the like, may be stored in a memory of the mobile phone and/or on a remote server system. Comparing the active audio route with the historical audio routes may include comparing the identifying information for the active audio route with identifying information for each of the historical audio routes. In response to determining that a match does not exist between the active audio route and any of the historical audio routes, and/or in response to determining that there are no historical audio routes, method 300 may proceed to block 325.

At block 325, the active audio route is added to the historical audio routes. In response to determining that a match does not exist between the active audio route and any of the historical audio routes, and/or in response to determining that there are no historical audio routes, the identifying information for the active audio route may be added to the list of historical audio routes. Contextual information may be stored in association with historical audio routes, such as a time of day when the drive was detected, a time when the audio route became active, a duration of time that the audio route was active, a number of drives during which the audio route was active, or the like.

If, at block 320, a match is identified, method 300 may instead proceed to block 330. At block 330, it is determined whether the matching historical audio route qualifies for association with the user driving a vehicle. This may include determining that the historical audio route has been active during a predefined threshold number of previous drives, such as 5 drives, 10 drives, 20 drives, or another number of drives. Additionally, or alternatively, this may include determining that the historical audio route has been active during a predefined number of consecutive drives. In some embodiments, user input is requested to confirm that a historical audio route qualifies for association with the user driving a vehicle, as described below. In response to determining that the historical audio route does not qualify, additional information about the current drive may be stored in association with the historical audio route and method 300 may return to block 305 to detect motion for the next drive.

At block 335, the active audio route is stored in preferences for the user in response to determining that it qualifies for association with the user driving a vehicle at block 330. Identifying information about the audio route may be stored in a memory of the mobile phone and/or on a remote server system in association with other information about the user. As described below, determining that the audio route is active during a subsequent drive may be used to determine that the user is actively driving a vehicle.

It should be appreciated that the specific steps illustrated in FIG. 3 provide a particular method of detecting and associating available audio routes to a user's operation of a vehicle according to an embodiment of the present invention. Other sequences of steps may also be performed according to alternative embodiments. For example, alternative embodiments of the present invention may perform the steps outlined above in a different order. Moreover, the individual steps illustrated in FIG. 3 may include multiple sub-steps that may be performed in various sequences as appropriate to the individual step. Furthermore, additional steps may be added or removed depending on the particular applications. One of ordinary skill in the art would recognize many variations, modifications, and alternatives.

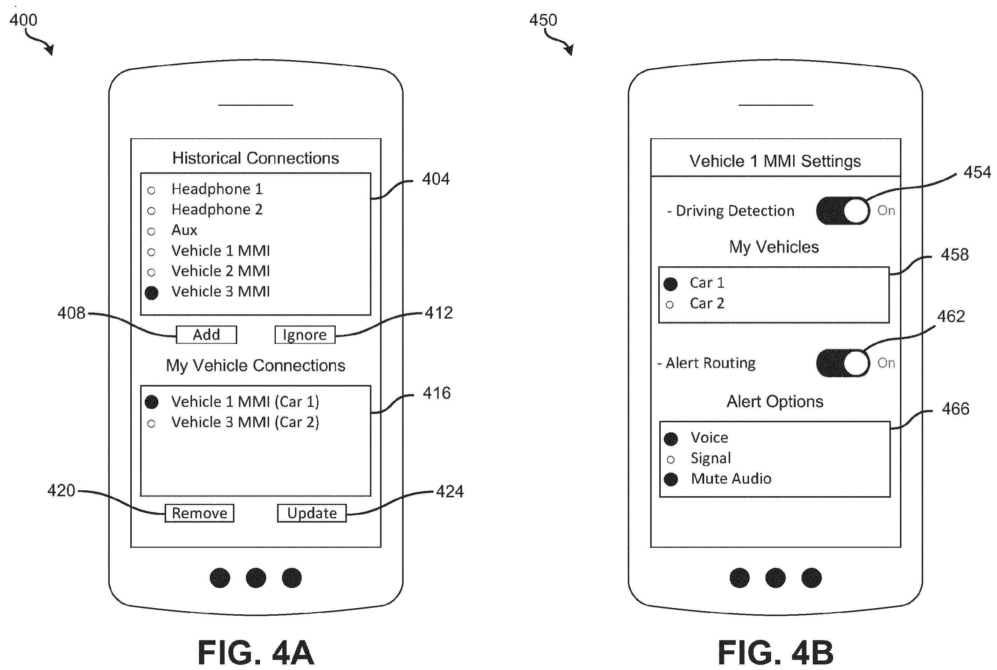

FIG. 4A illustrates an exemplary graphical user interface (GUI) 400 for managing audio routes associated with a user operating a vehicle according to aspects of the present disclosure. GUI 400 may be presented on a display of an electronic device, such as a mobile phone, laptop computer, smart watch, or the like. An application executing on a mobile device may cause the display of the mobile device to present GUI 400. The application may cause GUI 400 to be presented in response to one or more inputs from a user. For example, GUI 400 may be presented in response to a user request to view and edit settings and/or preferences associated with the user and/or the device executing the application. Additionally, or alternatively, the application may present GUI 400 in response to determining that a drive has completed during which the application was unable to determine whether the user was driving.

As illustrated, GUI 400 may include historical connections 404. Historical connections 404 may include a list of audio routes that were detected as being available and/or active during one or more prior drives. The list of audio routes in historical connections 404 may include wired analog or digital audio routes and/or wired or wireless digital audio routes, as described above in relation to audio interface 212. Historical connections 404 may enable a user to select one or more audio routes at a time. GUI 400 further includes add button 408. GUI 400 may further include ignore button 412. In response to user input selecting ignore button 412, one or more selected audio routes in historical connections 404 may be removed from the list. In response user input selecting add button 408, one or more selected audio routes in historical connections 404 may be added to vehicle connections 416.

Vehicle connections 416 may include a list of audio routes that have been identified as being associated with the user actively driving a vehicle. For example, users may manually add audio routes from historical connections 404 using add button 408. Additionally, or alternatively, audio routes may be automatically added to vehicle connections 416 based on a determination that an audio route was active for a predefined number of drives, as described above. In some embodiments, vehicle connections 416 identify specific vehicles associated with each audio route, indicating that when an audio route is detected during a drive, the user is driving the specific vehicle associated with the audio route. In response to user input selecting remove button 420, one or more selected audio routes in vehicle connections 416 may be removed so that they are no longer associated with the user driving a vehicle. In response to user input selecting update button 424, GUI 400 may be updated to display preferences and/or settings associated with an audio route selected from vehicle connections 416.

FIG. 4B illustrates an exemplary GUI 450 for managing preferences of audio routes associated with a user driving a vehicle according to aspects of the present disclosure. As described above, GUI 450 may be presented on a display of an electronic device, such as a mobile phone, in response to receiving user input requesting to view and/or modify settings for an audio route associated with the user driving a vehicle. As illustrated, GUI 450 may include driving detection toggle 454. Driving detection toggle 454 may represent a preference or setting for a particular audio route indicating whether the audio route should form the basis of a determination that the user is actively driving a vehicle. For example, with driving detection toggle 454 in the "On" state, a determination that the user is actively driving a vehicle may be made in response to determining that a mobile device is disposed in a vehicle during a drive and that the audio route is available and/or active during the drive.

GUI 450 may further include vehicle associations 458. Vehicle associations 458 may include a list of vehicles associated with a user. For example, the list of vehicles may be obtained from an insurance policy carried by the user or from manual input by the user. Vehicle associations 458 may indicate preferences and/or settings for associating driving of a particular vehicle with detection of a particular audio route. In combination with driving detection toggle 454, vehicle associations 458 may be used to determine which particular vehicle a user is driving when the audio route is available and/or active during a detected drive. For example, by selecting "Car 1" from vehicle associations 458, a user may cause an application executing on a mobile phone disposed in a vehicle to determine that the user is driving that particular car when the "Vehicle 1 MMI" audio route is available and/or active during a drive.

GUI 450 may further include alert routing toggle 462. Alert routing toggle 462 may represent a preference and/or setting for using a particular audio route when alerting a user (e.g., to performance of unsafe driving activities). For example, with driving detection toggle 454 in the "On" state, and alert routing toggle 462 in the "On" state, the application may provide alerts to the user of the mobile device through the "Vehicle 1 MMI" audio route when "Vehicle 1 MMI" is active and/or available during a detected drive. In some embodiments, the preference associated with alert routing toggle 462 may override an active audio route of the mobile phone. For example, during a drive in which "Vehicle 1 MMI" was available, but is not currently active, the application may cause the mobile phone to temporarily activate the "Vehicle 1 MMI" audio route to provide an audio alert to the user. Additionally, or alternatively, with driving detection toggle 454 in the "On" state, and alert routing toggle 462 in the "Off" state, the application may provide alerts to the user of the mobile device through an active audio route, which may include the "Vehicle 1 MMI" audio route or another audio route.

GUI 450 may further include alert options 466. Alert options 466 may represent preferences and/or settings associated with alert characteristics. In other words, while settings associated with alert routing toggle 462 may control how an application and/or a mobile phone outputs an alert (e.g., via a speaker of the mobile phone or a speaker of the vehicle), settings associated with alert options 466 may control what type of alert is provided. For example, alert options 466 may include options for providing voice alerts (e.g., spoken audio), signal alerts (e.g., a chime sound), visual alerts (e.g., a text notification presented on a display or a flashing signal), haptic alerts, options to silence alerts, or the like.

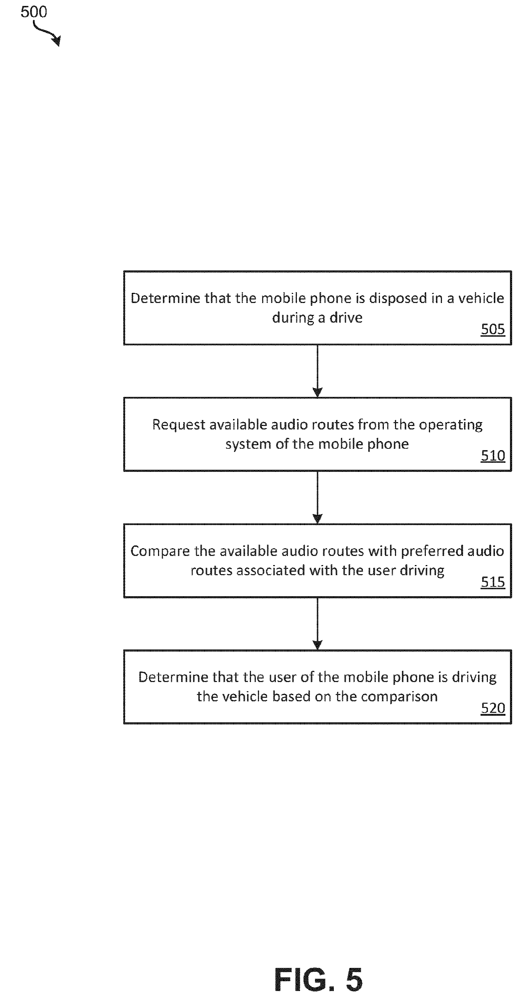

FIG. 5 illustrates an example of a method of determining that a user of a mobile device is driving a vehicle based on available audio routes according to aspects of the present disclosure. One or more blocks of method 500 may be performed by one or more hardware and/or software components of a mobile phone, such as mobile device 202 described above. Additionally, or alternatively, one or more blocks of method 500 may be performed by one or more processes executing on a remote server system, such as vehicle telematics server system 110.

At block 505, it is determined that the mobile phone is disposed in a vehicle during a drive. Block 505 may include some or all of the steps described above in relation to block 305 and block 310 of method 300. For example, block 505 may include analyzing measurements from one or more sensors of the mobile phone, such as accelerometers, GNSS receivers, gyroscopes, or the like, to detect motion of the mobile phone that is consistent with motion caused by a vehicle.

At block 510, available audio routes are requested from the operating system of the mobile phone. Block 510 may include some or all of the steps described above in relation to block 315 of method 300. For example, at block 510, an application executing on the mobile phone may request active and/or available audio routes from an operating system and/or audio interface of the mobile phone. In response, the application may receive identifying information for active and/or available audio routes. For example, the application may receive unique identifiers and/or descriptive names for audio routes that have been detected by an audio interface for a predefined period of time preceding the request and/or before driving was detected. As another example, the application may receive a unique identifier and/or a descriptive name for an audio route to which the operating system and/or the audio interface are actively connected to provide audio from the mobile phone to an audio output. As described above, audio routes may include wired and/or wireless data connections, such as a USB connection or a Bluetooth connection with a vehicle's interface, such as device-vehicle interface 206.

At block 515, the available audio routes are compared with preferred audio routes associated with the user driving a vehicle. Block 515 may include similar steps as described above in relation to block 320 of method 300. For example, at block 515, the application may compare identifying information for the active and/or available audio routes with identifying information from preferred audio routes associated with the user driving a vehicle. As described above in relation to method 300, a particular audio route may by identified as a preferred audio route associated with the user driving a vehicle in response to a determination that the particular audio route was available and/or active during a predefined number of detected drives. Additionally, or alternatively, audio routes may be identified as preferred audio routes in response to user input approving and/or defining an audio route as a preferred audio route.

At block 520, it is determined that the user of the mobile phone is driving the vehicle. A determination that the user of the mobile phone is driving a vehicle may be preconditioned on a determination that the mobile phone is disposed within a vehicle during a drive and that an active and/or available audio route during the drive matches with a preferred audio route. For example, in response to determining that the mobile phone is disposed within a vehicle during a drive, and that the identifying information for an active audio route matches the identifying information for an audio route that was active for a predefined number of drives preceding the current drive, it may be determined that the user of the mobile phone is currently driving the vehicle in which the mobile phone is disposed.

Additional determinations may be used to confirm that the user is currently driving the vehicle. For example, motion data from the mobile phone indicating that the mobile phone entered the vehicle from a driver side and that the mobile phone is located near the front of the vehicle may be used to confirm that the user of the mobile phone is currently driving the vehicle. As another example, in response to an initial determination that the user is currently, or was recently, driving a vehicle, an application executing on the mobile phone may cause a display of the mobile phone to present one or more options for the user to confirm that they were driving the vehicle. In response to a user input selecting an option, the initial determination may be confirmed or rejected.

It should be appreciated that the specific steps illustrated in FIG. 5 provide a particular method of determining that a user of a mobile device is driving a vehicle based on available audio routes according to an embodiment of the present invention. Other sequences of steps may also be performed according to alternative embodiments. For example, alternative embodiments of the present invention may perform the steps outlined above in a different order. Moreover, the individual steps illustrated in FIG. 5 may include multiple sub-steps that may be performed in various sequences as appropriate to the individual step. Furthermore, additional steps may be added or removed depending on the particular applications. One of ordinary skill in the art would recognize many variations, modifications, and alternatives.

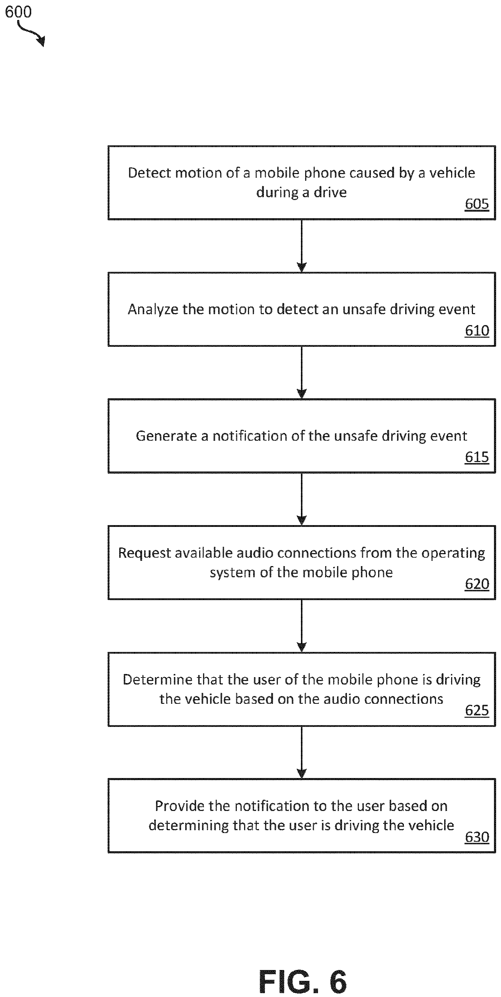

FIG. 6 illustrates an example of a method 600 of selectively alerting a user to unsafe driving activities based on available audio routes according to aspects of the present disclosure. One or more blocks of method 600 may be performed by one or more hardware and/or software components of a mobile phone, such as mobile device 202 described above. Additionally, or alternatively, one or more blocks of method 600 may be performed by one or more processes executing on a remote server system, such as vehicle telematics server system 110.

At block 605, motion is detected from one or more mobile phone sensors while the mobile phone is disposed in a vehicle during a drive. Block 605 may include some or all of the steps described above in relation to block 305 and block 310 of method 300. For example, block 605 may include analyzing measurements from one or more sensors of the mobile phone, such as accelerometers, GNSS receivers, gyroscopes, or the like, to detect motion of the mobile phone that is consistent with motion caused by a vehicle. Block 605 may further include analyzing the motion of the mobile phone to distinguish between motion caused by a vehicle and motion caused by other forces, such as a user physically manipulating the mobile phone. As described above, the motion of the mobile phone that is caused by a vehicle may be further analyzed to measure and record one or more features of the vehicle's dynamics, such as lateral and longitudinal accelerations, speed, elevation, lateral and/or longitudinal inclination angles, or the like.

At block 610, the motion is analyzed to detect an unsafe driving event. As described above in relation to activity detection engine 215, unsafe driving events may include driving activities and/or maneuvers that create an increased risk of an accident involving the vehicle, such as hard acceleration or deceleration, speeding, swerving, distracted driving, or the like. Motion of the mobile phone caused by motion of a vehicle may be analyzed to detect unsafe driving events. For example, motion of the mobile device can be filtered to isolate motions caused by the vehicle, from which the vehicle's dynamics, such as lateral and longitudinal vehicle accelerations, can be measured. Detecting unsafe driving events may include comparing the measurements for the vehicle's dynamics with one or more predefined threshold criteria. For example, to detect a hard braking event, the lateral acceleration of the vehicle over time can be compared with a predefined deceleration threshold indicative of hard braking. In response to determining that the vehicle's deceleration exceed the predefined deceleration threshold, a hard braking event can be recorded at the time and/or location associated with when the acceleration measurements were measured by the one or more sensors of the mobile phone.

At block 615, a notification of the unsafe driving event is generated. As described above in relation to alert engine 216, a notification of the unsafe driving event can be generated in response to detecting the occurrence of the unsafe driving event. As further described above, the notification may be used to alert the user of the mobile phone that an unsafe driving event was detected. For example, the notification may be provided as an auditory alert, such as a verbal phrase or distinct sound indicating that an unsafe driving event was detected.

At block 620, available audio routes are requested from the operating system of the mobile phone. As described above in relation to driving detection engine 214, an application executing on the mobile phone may request active and/or available audio routes from an operating system and/or audio interface of the mobile phone. In response, the application may receive identifying information for active and/or available audio routes. For example, the application may receive unique identifiers and/or descriptive names for audio routes that have been detected by an audio interface for a predefined period of time preceding the request and/or before driving was detected. As another example, the application may receive a unique identifier and/or a descriptive name for an audio route to which the operating system and/or the audio interface are actively connected to provide audio from the mobile phone to an audio output. As described above, audio routes may include wired and/or wireless data connections, such as a USB connection or a Bluetooth connection with a vehicle's interface, such as device-vehicle interface 206.

At block 625, it is determined that the user of the mobile phone is driving the vehicle based on the audio routes. Block 625 may include some or all of the steps described above in relation to block 515 and block 520 of method 500. For example, block 625 may include comparing the available and/or active audio routes received from the operating system with one or more preferred audio routes associated with the user of the mobile phone driving a vehicle. In response to determining that a match exists between the available and/or active audio routes and a preferred audio route, it may be determined that the user of the mobile phone is driving the vehicle.

At block 630, the notification is provided to the user based on determining that the user is driving the vehicle. As described above, the notification may be provided to the user via the active audio route for the mobile phone. Additionally, or alternatively, the notification may be provided to the user via an inactive audio route that is available. For example, while the mobile phone may be actively using a wireless data connection to output audio via the speakers of the vehicle, the notification may instead by output through the speakers of the mobile phone. In some embodiments, the notification is provided in real-time in response to detecting the unsafe driving event. Additionally, or alternatively, the notification may be stored in a memory of the mobile phone until after a completion of the drive is detected, at which point the notification can be provided to the user along with other notifications generated during the drive.

It should be appreciated that the specific steps illustrated in FIG. 6 provide a particular method of selectively alerting a user to unsafe driving activities based on available audio routes according to an embodiment of the present invention. Other sequences of steps may also be performed according to alternative embodiments. For example, alternative embodiments of the present invention may perform the steps outlined above in a different order. Moreover, the individual steps illustrated in FIG. 6 may include multiple sub-steps that may be performed in various sequences as appropriate to the individual step. Furthermore, additional steps may be added or removed depending on the particular applications. One of ordinary skill in the art would recognize many variations, modifications, and alternatives.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed but could have additional steps not included in a figure. A process may correspond to a method, a function, a procedure, a subroutine, a subprogram, etc. When a process corresponds to a function, its termination can correspond to a return of the function to the calling function or the main function.

Implementation of the techniques, blocks, steps, and means described above may be done in various ways. For example, these techniques, blocks, steps, and means may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), mask programmable gate array (MPGA), processors, controllers, micro-controllers, microprocessors, other electronic units designed to perform the functions described above, and/or combinations thereof.

Also, it is noted that the embodiments and/or examples may be described as a process which is depicted as a flowchart, a flow diagram, a swim diagram, a data flow diagram, a structure diagram, or a block diagram. Although a depiction may describe the operations as a sequential process, many of the operations can be performed in parallel or concurrently. In addition, one or more of the operations may be performed out-of-order from the order depicted. A process may terminate when its operations are completed or return to a previous step or block. A process could have additional steps or blocks not included in the figure. A process may correspond to a method, a function, a procedure, a subroutine, a subprogram, etc. When a process corresponds to a function, its termination corresponds to a return of the function to a calling function or a main function.

Furthermore, the devices and/or systems described herein may be implemented by hardware, software, scripting languages, firmware, middleware, microcode, hardware description languages, and/or any combination thereof. When implemented in software, firmware, middleware, scripting language, and/or microcode, the program code, or code segments to perform the necessary tasks may be stored in a non-transitory computer-readable medium such as a storage medium. A code segment or machine-executable instruction may represent a procedure, a function, a subprogram, a program, a routine, a subroutine, a module, a software package, a script, a class, or any combination of instructions, data structures, and/or program statements. A code segment may be coupled to another code segment or a hardware circuit by passing and/or receiving information, data, arguments, parameters, and/or memory contents. Information, arguments, parameters, data, etc. may be passed, forwarded, or transmitted via any suitable means including memory sharing, message passing, token passing, network transmission, etc.

For a firmware and/or software implementation, the methodologies may be implemented with modules (e.g., procedures, functions, and so on) that perform the functions described herein. Any non-transitory computer-readable medium tangibly embodying instructions may be used in implementing the methodologies described herein. For example, software codes may be stored in a memory. Memory may be implemented within the processor or external to the processor. As used herein, the term "memory" refers to any type of volatile, non-volatile, or other storage medium and is not to be limited to any particular type of memory, number of memories, or type of media upon which memory is stored.

Moreover, as disclosed herein, the term "storage medium" may represent one or more memories for storing data, including read only memory (ROM), random access memory (RAM), magnetic RAM, cache memory, magnetic disk storage mediums, optical storage mediums, flash memory devices, and/or other machine-readable mediums for storing information. The term "computer-readable medium" includes, but is not limited to, portable or fixed storage devices, optical storage devices, and/or various other storage mediums capable of storing that contain or carry instruction(s) and/or data.

While examples and features of disclosed principles are described herein, modifications, adaptations, and other implementations are possible without departing from the spirit and scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

It is also understood that the examples and embodiments described herein are for illustrative purposes only and that various modifications or changes in light thereof will be suggested to persons skilled in the art and are to be included within the spirit and purview of this application and scope of the appended claims, which follow.

## Claims

1. A method comprising:
determining, by an application executing on a mobile phone, that the mobile phone is disposed in a vehicle during a drive;
receiving, by the application, and from a sensor arrangement of the mobile phone, movement measurements indicating motion of the mobile phone caused by a user of the mobile phone or movement of the vehicle during the drive;
analyzing, by the application, the movement measurements to detect an occurrence of a driving event during the drive;
generating, by the application, a notification of the driving event;
receiving, by the application, and from an operating system of the mobile phone, audio routes available to the operating system to output audio during the drive;
determining, by the application, that a user of the mobile phone is driving the vehicle based on the audio routes available to the operating system during the drive; and
providing, by the application, the notification to a user of the mobile phone in response to determining that user of the mobile phone is driving the vehicle.

2. The method of claim 1, wherein determining that the user of the mobile phone is driving the vehicle comprises:
determining, by the application, that the audio routes comprise a first audio route from one or more predefined audio routes.

3. The method of claim 2, wherein the one or more predefined audio routes are defined by:
determining, by the application, that the mobile phone is disposed in any vehicle during a plurality of previous drives;
receiving, by the application, and from the operating system of the mobile phone, information about an active audio route during each drive of the plurality of previous drives;
determining, by the application, that the active audio route for a predefined threshold number of drives is a same audio route; and
storing, by the application, and in a memory of the mobile phone, the information about the same audio route in a predefined audio routes datastore.

4. The method of claim 3, further comprising:
determining, by the application, that the same audio route is a wired or wireless connection between the mobile phone and a vehicle interface.

5. The method of claim 2, wherein determining that the user of the mobile phone is driving the vehicle further comprises:
determining, by the application, that the first audio route was discovered by the operating system at a beginning of the drive.

6. The method of claim 2, wherein determining that the user of the mobile phone is driving the vehicle further comprises:
determining, by the application, that the mobile phone is actively connected to the first audio route.

7. The method of claim 2, wherein the mobile phone is not actively connected to the first audio route and determining that the user of the mobile phone is driving the vehicle further comprises:
determining, by the application, that the mobile phone connected to the first audio route between a first time corresponding to a beginning of the drive and a second time at which the driving event occurred.

8. The method of claim 1, wherein the audio routes comprise a speaker interface of the mobile phone and at least one of: a wired or wireless connection between the mobile phone and an audio output device.

9. The method of claim 1, wherein generating the notification of the driving event comprises generating, by the application, digital signals representing an audible alert of the occurrence of the driving event.

10. The method of claim 9, wherein providing the notification to the user of the mobile phone comprises:
transmitting, by the application, the digital signals to an active audio route of the audio routes available to the operating system to produce the audible alert at a speaker connected to the active audio route.

11. The method of claim 9, wherein providing the notification to the user of the mobile phone comprises:
transmitting, by the application, the digital signals to a predefined audio route of the audio routes available to the operating system to produce the audible alert at a speaker connected to the predefined audio route.

12. A driving activity detection and attribution system, comprising:
a mobile device, comprising:
an audio interface;
a motion sensor arrangement;
one or more processors coupled to the audio interface and the motion sensor arrangement; and
a memory storing a set of instructions which, when executed by the one or more processors, cause the one or more processors to perform operations comprising:
determining that the mobile device is disposed in a vehicle during a drive;
receiving from the motion sensor arrangement, movement measurements indicating motion of the mobile device caused by a user of the mobile device or movement of the vehicle during the drive;
analyzing the movement measurements to detect an occurrence of a driving event during the drive;
generating a notification of the driving event;
receiving, from the audio interface, audio routes available to the audio interface to output audio during the drive;
determining that the user of the mobile device is driving the vehicle based on the audio routes available to the audio interface during the drive; and
providing the notification to the user of the mobile device in response to determining that user of the mobile device is driving the vehicle.

13. The driving activity detection and attribution system of claim 12, wherein determining that the user of the mobile device is driving the vehicle comprises:
determining that the audio routes comprise a first audio route from one or more predefined audio routes.

14. The driving activity detection and attribution system of claim 13, wherein the operations further comprise defining the one or more predefined audio routes by:
determining that the mobile device is disposed in any vehicle during a plurality of previous drives;
receiving, from the audio interface, information about an active audio route during each drive of the plurality of previous drives;
determining that the active audio route for a predefined threshold number of drives is a same audio route; and
storing the information about the same audio route in a predefined audio routes datastore.

15. A non-transitory machine-readable storage medium, including instructions that, when executed by one or more processors of a mobile device, cause the one or more processors to perform operations comprising:
determining that the mobile device is disposed in a vehicle during a drive;
receiving, from a sensor arrangement of the mobile device, movement measurements indicating motion of the mobile device caused by a user of the mobile device or movement of the vehicle during the drive;
analyzing the movement measurements to detect an occurrence of a driving event during the drive;
generating a notification of the driving event;
receiving, from an audio interface of the mobile device, audio routes available to the audio interface to output audio during the drive;
determining that the user of the mobile device is driving the vehicle based on the audio routes available to the audio interface during the drive; and
providing the notification to the user of the mobile device in response to determining that user of the mobile device is driving the vehicle.
